# EUROPÄISCHE PATENTSCHRIFT

(11) **EP 2 621 837 B1**
(45) Veröffentlichungstag und Bekanntmachung des Hinweises auf die Patenterteilung: **31.12.2014**
(21) Anmeldenummer: 11801957.9
(22) Anmeldetag: 17.08.2011
(51) Int. Cl.: B65G 23/04

(54) **ANTRIEBSTROMMEL, UMLENKTROMMEL UND SPANNTROMMEL FÜR GURTBANDFÖRDERER**
DRIVING DRUM, DEFLECTING DRUM, AND TENSIONING DRUM FOR BELT CONVEYORS
TAMBOUR D'ENTRAÎNEMENT, TAMBOUR DE RENVOI ET TAMBOUR DE TENSION POUR TRANSPORTEURS À COURROIE

(30) Priorität: 11.12.2010 DE 102010054207
(43) Veröffentlichungstag der Anmeldung: 07.08.2013
(73) Patentinhaber: Takraf GmbH, 04347 Leipzig (DE)
(72) Erfinder: PETACK, Burkhard, 01968 Senftenberg (DE)
(74) Vertreter: Kailuweit & Uhlemann Patentanwälte Partnerschaft mbB
(86) Internationale Anmeldenummer: PCT/DE2011/001629
(87) Internationale Veröffentlichungsnummer: WO 2012/075976

(56) Entgegenhaltungen:
- BE-A- 557 443
- DE-A1- 2 053 652
- GB-A- 898 165
- US-A- 3 074 288
- US-A- 5 899 321

## Beschreibung

Die Erfindung betrifft die konstruktive Ausbildung von Antriebs-, Umlenk- und Spanntrommeln mit einem einstückigen oder aus einem mittleren und zwei beiderseits daran angebrachten Lagerstücken bestehenden Trommelmantel für Gurtbandförderer.

### Stand der Technik

Gurtbandförderer werden im Bergbau zum Transport von Massengütern wie beispielsweise Abraum und mineralische Rohstoffe eingesetzt. Dabei werden an die Antriebs - und Umlenktrommeln für Gurtbandförderer mit vor allem längeren, sich über mehrere Kilometer erstreckende Förderwege, wie sie vorzugsweise in Tagebauen zur Anwendung kommen, hohe Anforderungen hinsichtlich der Leistungsfähigkeit und des Verschleißschutzes gestellt.

Antriebstrommein für Gurtbandförderer sind in ihrer klassischen Ausführung aus "Dubbel interaktiv 2.0 "Das elektronische Taschenbuch für den Maschinenbau", Springer-Verlag Berlin Heidelberg 2002, Abschnitt U 3.2.3 Konstruktionselemente und Baugruppen für Stetigförderer unter der Überschrift "Antriebs-, Spann- und Umlenktrommeln", Bild 13. Antriebseinheit bekannt. Die dort gezeigte Antriebseinheit besteht aus einem Elektromotor mit einer Kupplung und einem Steckgetriebe. Die Achse der Antriebstrommel reicht in die Aufnahme des Steckgetriebes hinein. Im Bild 15 ist eine solche Antriebstrommel dargestellt, die beiderseits durch eine Antriebseinheit in eine Drehbewegung versetzt wird. Die in Folge der hohen Belastung entstehende Verformung einer Antriebstrommel ist in Bild 14. dargestellt. Daraus ist ersichtlich, dass der Trommelmantel und die Trommelachse unterschiedliche Verformungscharakteristiken aufweisen. Sie werden dadurch ausgeglichen, dass die beiden, die Achse und den Trommelmantel verbindenden Stirnwänden als Membrane ausgebildet werden. Die Verformungen der Trommelachse sind konstruktiv bedingt und müssen durch die Lager und das oder die Steckgetriebe aufgenommen und/oder ausgeglichen (kompensiert) werden.

Versuche, diese Verformungen durch eine steifere Ausbildung der besonders beanspruchten Bauteile zu kompensieren, können zu Rissbildungen an den damit neu geschaffenen Bereichen hoher Beanspruchungen führen. Ein weiterer Nachteil besteht darin, dass durch die beschriebenen Verformungen die technische Nachhaltigkeit bei der Ausbildung der Lager berücksichtigt werden müssen. Es kommen vorzugsweise Pendelrollenlager zum Einsatz deren Anschaffung sehr teuer ist. Der beschriebene technische Zustand ist auch auf die Umlenktrommeln und Spanntrommeln übertragbar.

Dei US 3 074 288 A offenbart eine Trommel mit den Merkmalen der Oberbegriffe der Ansprüche 1 und 7.

### Aufgabenstellung

Der Erfindung liegt die Aufgabe zugrunde, die Antriebstrommeln, Umlenktrommeln und Spanntrommeln für Gurtbandförderer konstruktiv so auszubilden, dass die einwirkenden hohen Kräfte von den tragenden Bauteilen bei geringen Verformungen gut aufgenommen und bis in die Lager weiter geleitet werden können.

Diese Aufgabe wird durch die Trommel gemäß den Ansprüchen 1 und 7 gelöst, wobei die Trommelgrundkörper grundsätzlich für alle drei Trommelarten jeweils nur noch aus einem hohlzylinderförmigen Trommelmantel bestehen, die beiderseits außen an ihrem Umfang mit Lagersitzen versehen und dort direkt von Lagern aufgenommen werden. Diese Trommelmäntel bestehen aus einem mittleren Trommelkörper und zwei beiderseits daran in einer gemeinsamen Achse befestigten äußeren Lagerstücken. Bei der Ausführung als Antriebstrommel werden zusätzlich die Antriebe von außen angeschlossen.

An das Mittelstück der Antriebs- Umlenk- oder Spanntrommel wird beiderseits koaxial ein hohlzylinderförmiges Lagerstück angebracht. Alle drei Teilstücke weisen den gleichen Außendurchmesser auf. Jedes dieser beiden Lagerstücke nimmt außen ein Wälzlager auf, dessen Innenring koaxial verdrehfest am Umfang des Lagerstücks angeordnet ist und dessen Außenring von einem Lagerschild aufgenommen wird. Das eine Lager ist ein Festlager und das andere ein Loslager. Das Mittelstück und die beiden Lagerstücke werden mit zueinander passenden Flanschen versehen und miteinander verschraubt.

Der Trommelmantel wird so stabil ausgebildet, dass die vorgegebenen Maximalwerte für die Verformung nicht überschritten werden. Die Stabilität der Trommeln kann erhöht werden durch eine Vergrößerung des Durchmessers und der Wanddicke des Trommelmantels und/oder das Einschweißen von Rippen und Schottblechen innerhalb der Trommel sowie eine Reduzierung des Abstandes beider Lager zueinander.

Bei der Ausbildung als Antriebstrommel wird die Drehbewegung durch einen Antrieb von außen auf eins der beiden Lagerstücke übertragen. Bei Bedarf einer höheren Antriebsleistung wird auf der anderen Seite an dem dort befindlichen Lagerstück ein zweiter Antrieb angeschlossen. Als Antriebe kommen getriebelose Direktantriebe oder elektromechanische Antriebe zur Anwendung. Beim elektrischen Direktantrieb, wird der drehende Rotor direkt mit dem Trommelmantel verbunden oder aufgesetzt. Der Stator wird dann Bestandteil des stehenden Motorgehäuses. Die elektromechanischen Antriebe werden am Getriebeausgang durch einen Adapter, einer Kupplung oder direkt mit der Stirnseite der Antriebstrommel verbunden.

Der wesentlichste Vorteil, der durch die erfindungsgemäße Ausbildung der Trommeln entsteht, besteht darin, dass durch die großen Durchmesser der Trommelmäntel und die verwendeten großen Lager zusammen mit den Lagerschilden eine hohe Stabilität erreicht wird. Die Durchbiegungen der dynamisch beanspruchten Teile sind gegenüber den bekannten Antriebs-, Umlenk- und Spanntrommeln mit Welle und Trommelböden wesentlich geringer.

Durch Ausbildung der Anschlussstellen zwischen Mittelstück und Lagerstücken als Flansche ist eine einfache Montage und Demontage sowie günstige Wartung und Pflege aller Verschleißteile möglich.

Der übersichtliche konstruktive Aufbau der Baugruppen und ihre Verbindung miteinander gestattet die Einführung anwendungsspezifischer Baureihen.

### Ausführungsbeispiele

Weitere Einzelheiten und Vorteile des Erfindungsgegenstandes ergeben sich aus der nachfolgenden Beschreibung und den dazugehörigen Zeichnungen, in denen vier bevorzugte Ausführungsbeispiele für Antriebs-, Umlenk- und Spanntrommeln dargestellt sind. Es zeigen
Fig. 1 eine Antriebstrommel mit einem getriebelosen Direktantrieb in einer perspektivischen Ansicht als erstes Ausführungsbeispiel,
Fig. 2 die Antriebstrommel nach Fig. 1 als Explosionsdarstellung,
Fig. 3 eine Antriebstrommel mit einem elektromechanischen Antrieb in einer perspektivischen Ansicht als zweites Ausführungsbeispiel,
Fig. 4 die Antriebstrommel nach Fig. 3 als Explosionsdarstellung,
Fig. 5 eine Antriebstrommel mit Flanschen und einem direkt angeschlossenen elektromechanischen Antrieb und einem Trommelboden ohne Flansch in einer perspektivischen Ansicht als drittes Ausführungsbeispiel,
Fig. 6 die Antriebstrommel nach Fig. 5 als Explosionsdarstellung,
Fig. 7 eine Umlenk- und Spanntrommel in einer perspektivischen Ansicht als viertes Ausführungsbeispiel und
Fig. 8 die Umlenk- und Spanntrommel nach Fig. 7 als Explosionsdarstellung.

### Erstes Ausführungsbeispiel

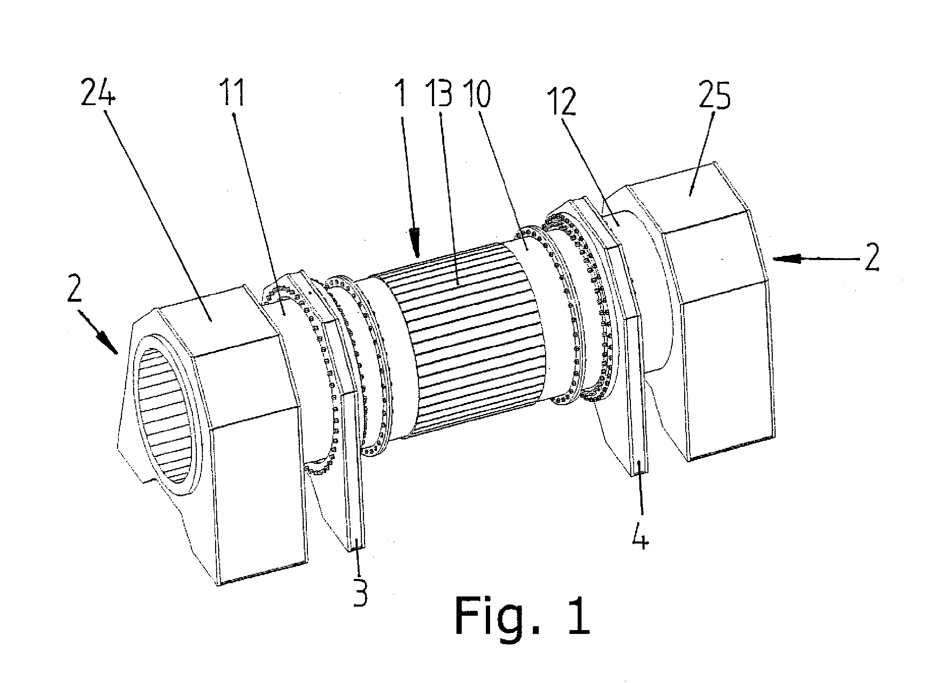

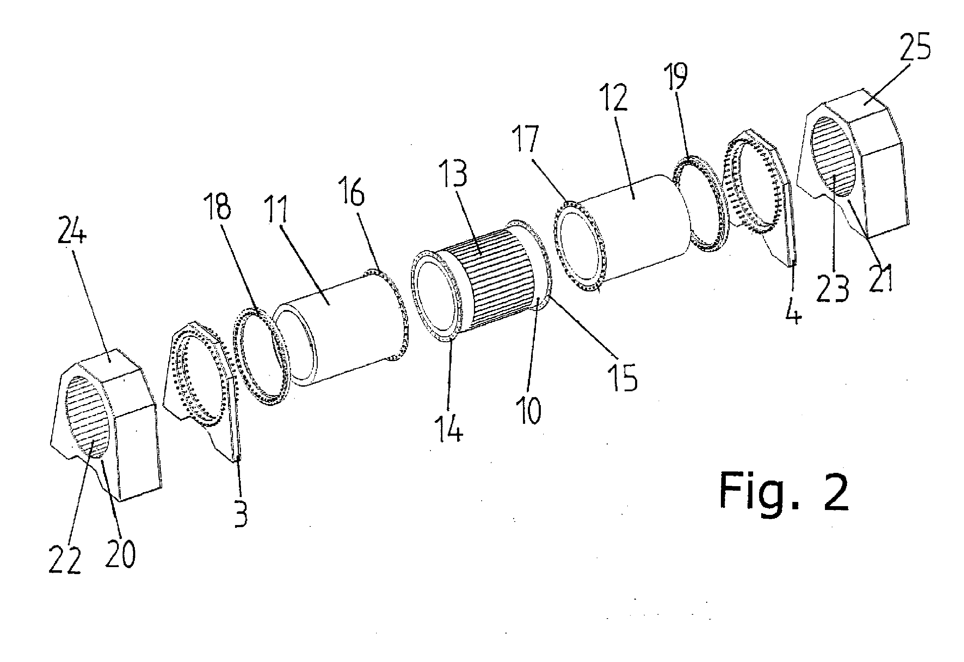

Die Antriebstrommel für Gurtbandförderer besteht nach Fig.1 und 2 aus dem hohlzylinderförmigen Trommelmantel 1 mit dem mittleren Trommelkörper 10 und den beiderseits daran lösbar befestigten Lagerstücken 11 und 12. Der mittlere Trommelkörper 10 ist außen zur Mitnahme des zeichnerisch nicht dargestellten Fördergurts des Gurtbandförderers mit einem Reibbelag 13 versehen. Beiderseits weist der mittlere Trommelkörper 10 jeweils einen Flansch 14, 15 auf. Ebenso sind die beiden Lagerstücke 11 und 12 jeweils mit einem Flansch 16, 17 versehen. An diesen Flanschen 14 mit 16 und 15 mit 17 wird beiderseits des mittleren Trommelkörpers 10 jeweils ein Lagerstück 11 und 12 angeschraubt. Beide Lagerstücke 11 und 12 ragen in einen beiderseits angeordneten elektrischen Direktantrieb 2 hinein. Jeder der beiden Direktantriebe 2 besteht aus einem äußeren Stator 20, 21 und einem inneren Rotor 22, 23. Die äußeren Statoren 20, 21 werden jeweils von einem Gehäuse 24, 25 aufgenommen.

Jeder der beiden Lagerstücke 11 und 12 weist an seinem Umfang einen Lagersitz für ein Wälzlager 26, 27 auf. Außen wird jedes der beiden Wälzlager 26, 27 von einem Lagerschild 3, 4 aufgenommen. Dabei bildet eins der beiden Lager das Festlager und das andere das Loslager. Die Gehäuse 24, 25 des Direktantriebs 2 und die Lagerschilde 3, 4 sind in Festpunkten verankert. Der mittlere Trommelkörper 10, die beiden Lagerstücke 11, 12 und der Direktantrieb 2 sind in einer gemeinsamen Achse angeordnet.

Die so ausgebildete Konstruktion der Antriebstrommel mit den außen aufgesetzten Direktantrieben 2 und den Lagern für den Trommelmantel 1 sind gegenüber den bekannten Antriebstrommeln mit Antriebswellen auf Grund der großen Durchmesser wesentlich stabiler.

Bei dieser konstruktiven Ausbildung des Trommelantriebes ist es möglich, bei Bedarf außen auf einer Seite oder auf beiden eine Bremsscheibe anzuordnen.

Bei sehr hoch beanspruchten Gurtbandförderern kann außen neben den Direktantrieben 2 jeweils noch ein weiteres, mit einem Lagerschild ausgerüstetes Lager vorgesehen werden.

### Verwendete Bezugszeichen:

1 Trommelmantel, bestehend aus:
   10 mittlerer Trommelkörper
   11 Lagerstück
   12 Lagerstück
   13 Reibbelag
   14 Flansch
   15 Flansch
   16 Flansch
   17 Flansch
   18 Wälzlager
   19 Wälzlager
2 Direktantrieb, bestehend aus:
   20 Stator
   21 Stator
   22 Rotor
   23 Rotor
   24 Gehäuse
   25 Gehäuse
3 Lagerschild
4 Lagerschild

### Zweites Ausführungsbeispiel

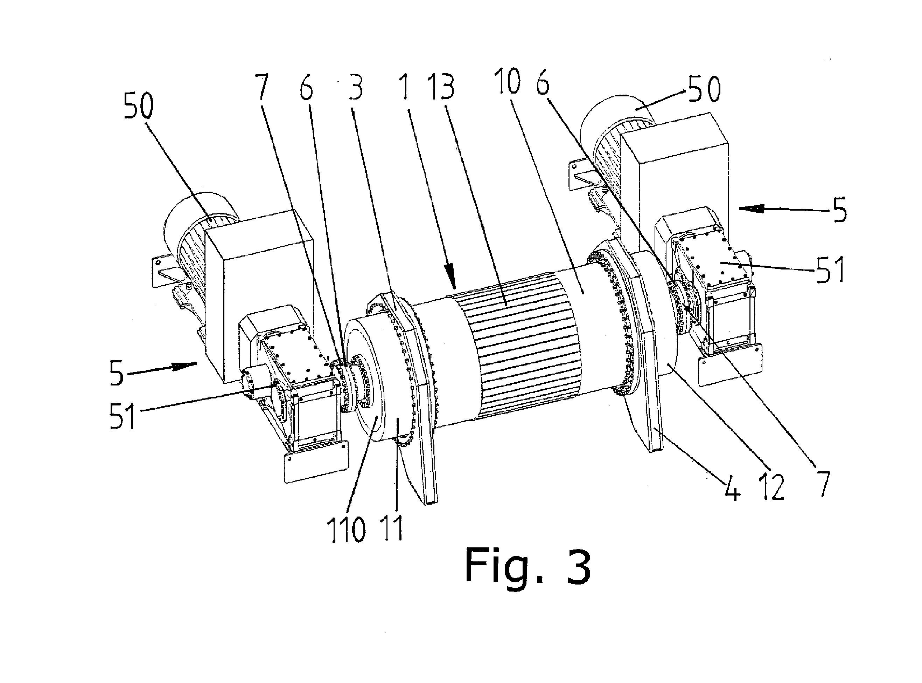

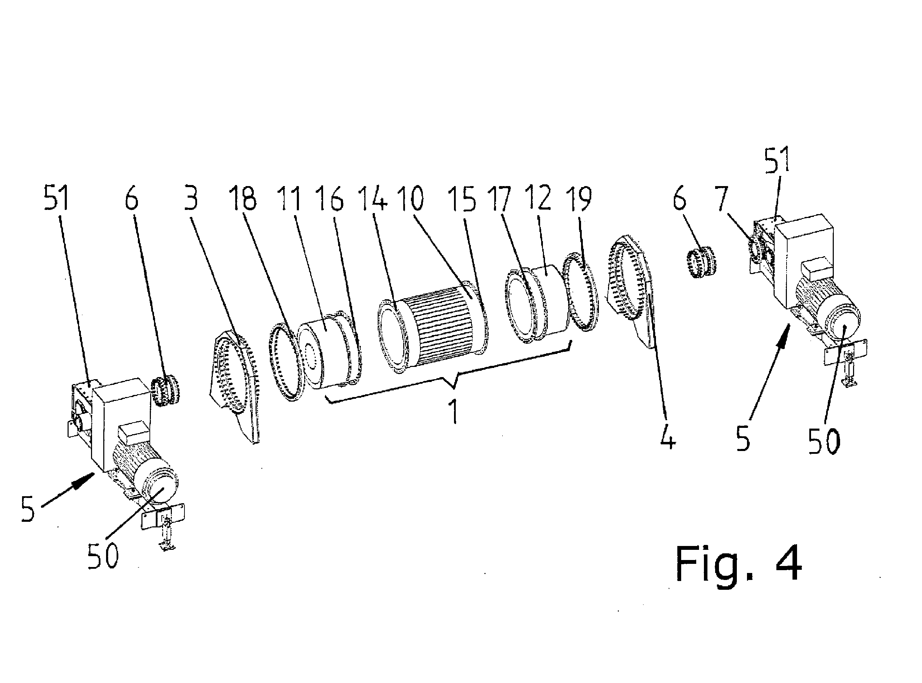

In den Fig. 3 und 4 ist ein zweites Ausführungsbeispiel mit einer Antriebstrommel 1 ohne Welle mit elektromechanischem Antrieb, bestehend aus E-Motor 50 und Getriebe 51 dargestellt. An dem mittleren Trommelkörper 10 sind beiderseits ebenfalls Lagerstücke 11, 12 angeflanscht. Diese Lagerstücke 11, 12 nehmen die Wälzlager 18, 19 auf, die beiderseits mit den Lagerschilden 3, 4 einerseits ein Festlager und andererseits ein Loslager bilden.

Dieser Aufbau stimmt im Wesentlichen mit dem konstruktiven Aufbau des ersten Ausführungsbeispiels Variante überein, deshalb werden am Ende dieses zweiten Ausführungsbeispiels an Stelle der nochmaligen Beschreibung mit der Anordnung der Einzelteile nur die verwendeten Bezugszeichen als Übersicht dargestellt. Unterschiedlich ist jedoch bei diesem zweiten Ausführungsbeispiel, dass die Lagerstücke 11, 12 außen jeweils mit einem Trommelboden 110, 120 versehen sind und jeder dieser Trommelböden 110, 120 mit einem Flansch 6 versehen ist. Die Getriebeausgangswellen sind ebenfalls mit einem Flansch 7 bestückt. Durch die Verbindung der Flansche 6, 7 des Trommelbodens 110, 120 und des Getriebeausganges werden die Drehbewegung und das Drehmoment auf den Trommelmantel 1 übertragen.

Verwendete Bezugszeichen:
1 Trommelmantel, bestehend aus:
   10 mittlerer Trommelkörper
   11 Lagerstück mit
      110 Trommelboden
   12 Lagerstück mit
      120 Trommelboden
   13 Reibbelag
   14 Flansch
   15 Flansch
   16 Flansch
   17 Flansch
   18 Wälzlager
   19 Wälzlager
3 Lagerschild
4 Lagerschild
5 elektromechanischer Antrieb, bestehend aus
   50 E-Motor
   51 Getriebe
6 Flansch
7 Flansch

### Drittes Ausführungsbeispiel

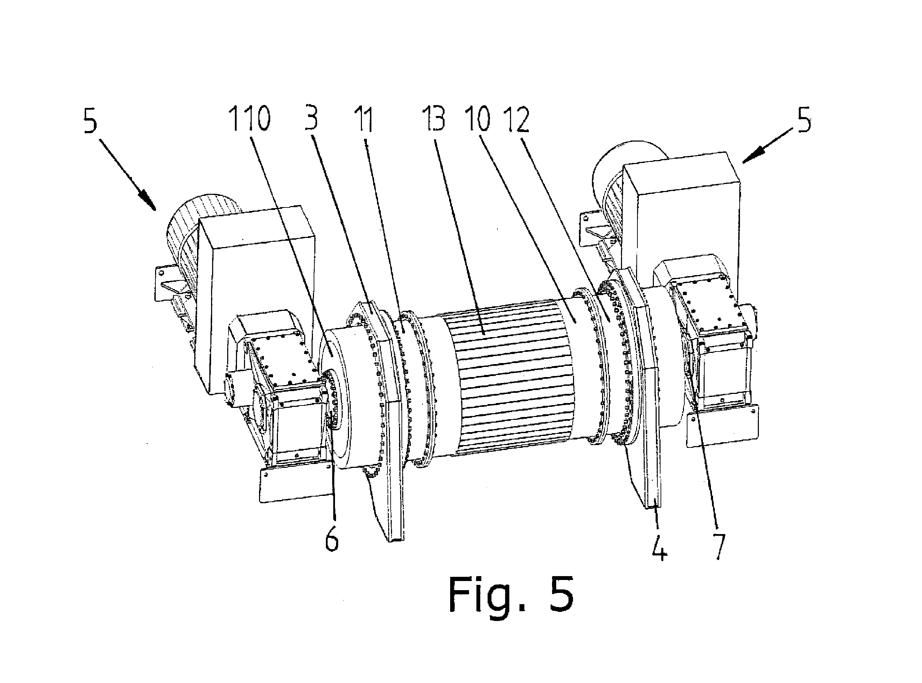

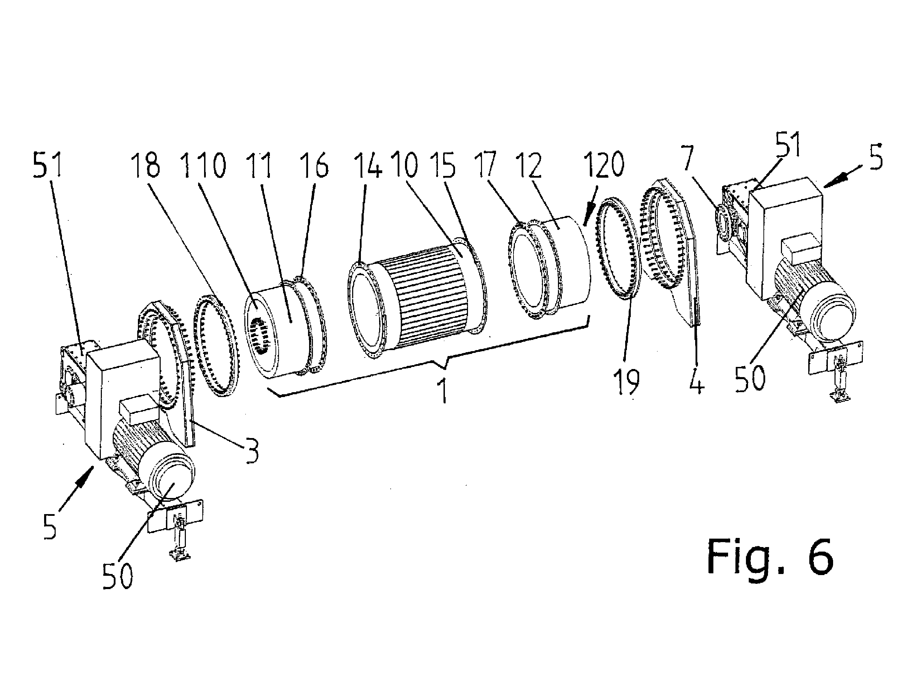

Das in den Fig. 5 und 6 dargestellte dritte Ausführungsbeispiel einer Antriebstrommel unterscheidet sich von dem vorstehend beschriebenen zweiten Ausführungsbeispiel lediglich dadurch, dass der Getriebeausgang des elektromechanischen Antriebes 5 als Flansch 6, 7 ausgebildet ist, welcher auf die auf die Getriebeausgangswelle aufgesteckt ist und zentrisch direkt mit dem Trommelböden 110, 120 verschraubt wird. Dabei hängt es von den jeweiligen Einsatzbedingungen ab, ob der E-Motor 50 mit dem Getriebe 51 der elektromechanischen Antriebe 5 in der nach Fig. 5 oder Fig. 6 dargestellten Richtung zeigt.

### Verwendete Bezugszeichen:

1 Trommelmantel, bestehend aus:
   10 mittlerer Trommelkörper
   11 Lagerstück mit
      110 Trommelboden
   12 Lagerstück mit
      120 Trommelboden
   13 Reibbelag
   14 Flansch
   15 Flansch
   16 Flansch
   17 Flansch
   18 Wälzlager
   19 Wälzlager
3 Lagerschild
4 Lagerschild
5 elektromechanischer Antrieb, bestehend aus
   50 E-Motor
   51 Getriebe
   52 Flansch
   53 Flansch

Auch bei diesen Lösungen nach dem zweiten und dritten Ausführungsbeispiel wird durch die großen Durchmesser des Trommelmantels 1 und der Lagerungen mit den Lagerschilden 3, 4 eine hohe Stabilität erreicht. Die Durchbiegungen der besonders beanspruchten Teile sind gegenüber den bekannten Trommelantrieben mit Welle und Trommelböden wesentlich geringer. Diese Stabilität kann durch in den mittleren Trommelkörper 10 und den Trommelendkörpern 11, 12 eingeschweißte Rippen und/oder Schottbleche erhöht werden. Durch die lösbaren Flanschverbindungen ist es bei Bedarf in einfacher Weise möglich, den mittleren Trommelkörper 10 zu demontieren, den verschlissenen Reibbelag 13 zu erneuern und danach den Trommelkörper 10 wieder einzubauen.

Werden nicht so hohe Antriebsleistungen für den Gurtbandförderer benötigt, reicht es aus, wenn nur ein Antrieb vorgesehen wird. Die Anwendung von zwei Antrieben zur Erzielung hoher Antriebsleistungen ist jedoch mit dem Vorteil verbunden, dass die Kräfte von beiden Seiten gleichmäßig auf die Antriebstrommel eingeleitet werden und so günstigere Belastungsparameter erzielt werden.

### Viertes Ausführungsbeispiel

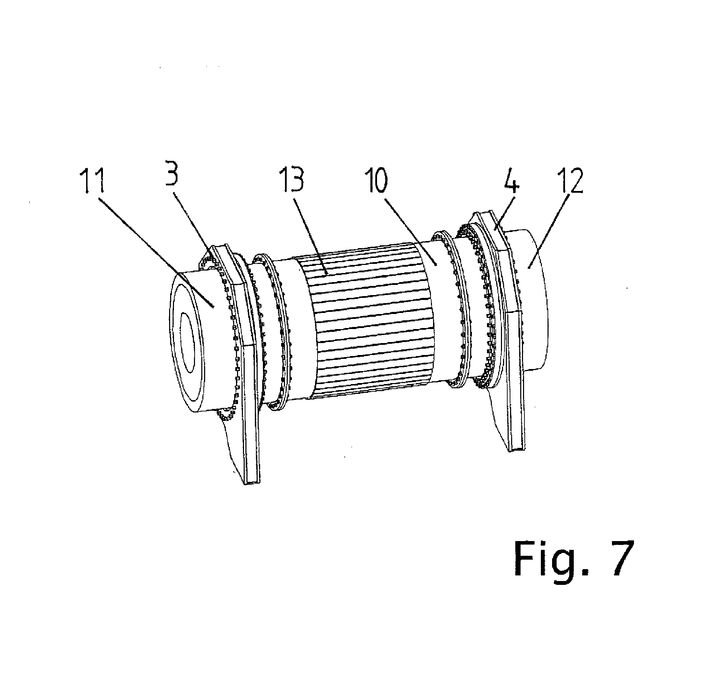

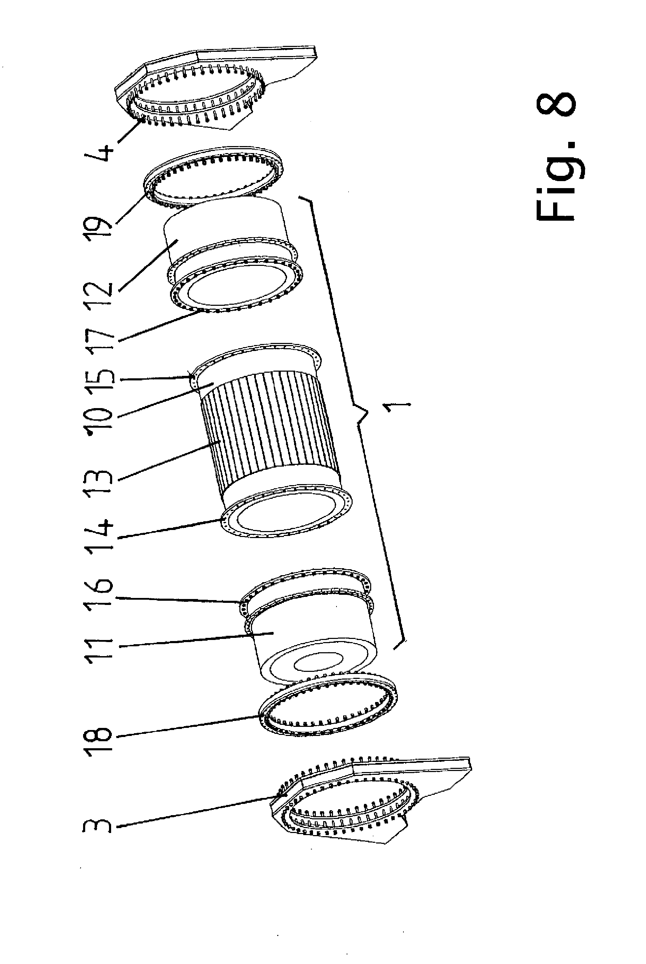

Das vierte Ausführungsbeispiel nach den Fig. 7 und 8 betrifft eine Umlenktrommel oder Spanntrommel für Gurtbandförderer, deren Trommelmantel 1 im Prinzip so aufgebaut ist, wie die vorstehend beschriebenen Antriebstrommeln. Der Trommelmantel 1 besteht aus einem mittleren Trommelkörper 10, an den beiderseits je ein Lagerstück 11, 12 angeflanscht ist. Jedes dieser beiden Lagerstücken 11, 12 nimmt an seinem Umfang ein Wälzlager 18, 19 auf, das außen jeweils von einem Lagerschild 3, 4 getragen wird. Bei der Ausführung als Spanntrommel werden die Lagerschilde 3, 4 in einer Gurtspanneinrichtung in Fördergurtlängsrichtung verschiebbar angeordnet.

### Verwendete Bezugszeichen:

1 Trommelmantel, bestehend aus:
   10 mittlerer Trommelkörper
   11 Lagerstück mit
      110 Trommelboden
   12 Lagerstück mit
      120 Trommelboden
   13 Reibbelag
   14 Flansch
   15 Flansch
   16 Flansch
   17 Flansch
   18 Wälzlager
   19 Wälzlager
3 Lagerschild
4 Lagerschild

Auch bei einer solchen Umlenktrommel oder Spanntrommel kann der Trommelmantel 1 außen mit einem Reibbelag 13.

## Patentansprüche

1. Antriebstrommel für einen Gurtbandförderer, bestehend aus einem hohlzylinderförmigen Trommelmantel (1), der beiderseits drehbar gelagert ist und entweder von einer Seite oder von beiden Seiten angetrieben wird, wobei an einem mittleren Trommelkörper (10), der beiderseits mit einem Flansch (14, 15) versehen ist, beiderseits ein ebenfalls mit jeweils einem Flansch (16, 17) versehenen Lagerstück (11, 12) angeschraubt ist, jeder der beiden Lagerstücke (11 , 12) außen ein Wälzlager (18, 19) aufnimmt, dessen Innenring koaxial verdrehfest auf dem Umfang des Lagerstücks (11, 12) angeordnet ist und dessen Außenring von einem Lagerschild (3, 4) aufgenommen wird, wobei das eine Lager ein Festlager und das andere Lager ein Loslager ist, und an mindestens einem der beiden Lagerstücke (11, 12) ein Antrieb angeschlossen ist, wobei der Antrieb oder die Antriebe sowie die Lagerschilde (3, 4) auf einer gemeinsamen Basis lösbar befestigt sind, **dadurch gekennzeichnet, dass** die beiden Lagerstücke (11, 12) und der Trommelkörper (10) den gleichen Außendurchmesser aufweisen.

2. Antriebstrommel für einen Gurtbandförderer nach Anspruch 1., **dadurch gekennzeichnet, dass** als Antriebe entweder langsam laufende getriebelose Direktantriebe (2) oder elektromechanische Antriebe (5) vorgesehen sind.

3. Antriebstrommel für einen Gurtbandförderer nach den Ansprüchen 1. und 2., **dadurch gekennzeichnet, dass** als Antrieb Torque-Motoren vorgesehen sind, wobei jeweils der außen liegende Stator (20, 21) fest mit dem Motorengehäuse (24, 25) und der innen liegende Rotor (22, 23) des Elektromotors verdrehfest und lösbar mit dem hohlzylinderförmigen Lagerstück (11, 12) verbunden ist.

4. Antriebstrommel für einen Gurtbandförderer nach den Ansprüchen 1. und 2., **dadurch gekennzeichnet, dass** als elektromechanische Antriebe (5) schnell laufende Elektromotoren (50) mit einem nachfolgenden Getriebe (51) vorgesehen sind und der Getriebeausgang entweder über ein Verbindungsstück (6, 7) oder ein am Getriebeausgang aufgesteckter Flansch (52, 53) oder einer Kupplung mit dem Lagerstück (11, 12) in funktioneller Verbindung steht.

5. Antriebstrommel für Gurtbandförderer nach den Ansprüchen 1. und 2., **dadurch gekennzeichnet, dass** der Trommelmantel (1) innen durch eingeschweißte Rippen und/oder Schottbleche verstärkt ist.

6. Antriebstrommel für Gurtbandförderer nach den Ansprüchen 1. und 2., **dadurch gekennzeichnet, dass** der mittlere Trommelkörper (10) außen auf der Lauffläche des Gurtbandes mit einem Reibbelag (13) versehen ist.

7. Umlenktrommel und Spanntrommel für Gurtbandförderer aufweisend einen Trommelmantel (1) aus einem mittleren Trommelkörper (10) besteht an den beiderseits je ein Lagerstück (11, 12) angeflanscht ist und jedes der beiden Lagerstücken ein Wälzlager aufnimmt, dass jeweils außen von einem Lagerschild (3, 4) getragen wird, **dadurch gekennzeichnet, dass** die beiden Lagerstücke (11, 12) und der Trommelkörper (10) den gleichen Außendurchmesser aufweisen.

8. Spanntrommel nach Anspruch 7, **dadurch gekennzeichnet, dass** die Lagerschilde (3, 4) in einer Gurtspanneinrichtung in Fördergurtlängsrichtung verschiebbar angeordnet sind.

## Claims

1. Driving drum for a belt conveyor, consisting of a drum jacket shaped as a hollow cylinder and mounted in a rotatable manner on both ends and driven either from one or both ends, having a center drum body (10) provided with a flange (14, 15) on each end, has at both ends a bearing piece (11,12) provided with one flange each (16, 17) screwed on to it, further, that each of the two bearing pieces (11,12) accommodates on its outside a rolling-element bearing (18, 19), the inner ring of which is arranged coaxially and secured against rotation at the circumference of the bearing piece (11, 12), and the outer ring of which is accommodated by a bearing shield (3, 4), whereby one bearing is a fixed bearing, and the other a floating bearing, and whereby a drive is connected to at least one of the two bearing pieces (11,12) the drive or drives and the bearing shields (3, 4) being attached detachably on a joint base, **characterised in that**, the two bearing pieces (11, 12) and the center drum body (10) have the same outer diameter.

2. Driving drum for a belt conveyor according to claim 1, **characterised in that** either slowly running gearless direct drives (2) or electromechanical drives (5) are intended as drives.

3. Driving drum for a belt conveyor according to claims 1 and 2, **characterised in that** torque motors are intended as drives, whereby in each case the outside stator (20, 21) is attached in a fixed manner with the engine housing (24, 25) and the inside rotor (22, 23) of the electric motor is attached in a manner secured against rotation and detachably to the bearing piece (11, 12) shaped as a hollow cylinder.

4. Driving drum for a belt conveyor according to claims 1 and 2, **characterised in that** quickly running electric motors (50) with a connected gear (51) are intended as electromechanical drives (5) and the transmission output is operably connected to the bearing piece (11,12) either by means of a connecting piece (6,7) or by means of a flange (52, 53) plugged onto the transmission output, or by means of a coupling.

5. Driving drum for belt conveyors according to claims 1 and 2, **characterised in that** the drum jacket (1) is reinforced on its inside by welded ridges and/or bulkhead plates.

6. Driving drum for belt conveyors according to claims 1 and 2, **characterised in that** the center drum body (10) is on its outside provided with a friction lining (13) on the running surface of the conveyor belt strap.

7. Deflecting drum and tensioning drum for belt conveyors having a drum jacket (1) consists of a center drum body (10), to which on each end one bearing piece (11,12) is flange-mounted, and each of the two bearing pieces accommodates a rolling-element bearing seated on the outside in a bearing shield (3,4) each, **characterised in that**, the two bearing pieces (11, 12) and the center drum body (10) have the same outer diameter.

8. Tensioning drum according to claim 7 **characterised in that** the bearing shields (3, 4) are arranged in a slideable manner in a belt tensioning device in longitudinal direction of the conveyor belt.

## Revendications

1. Tambour d'entraînement pour un transporteur à courroie, constitué d'une enveloppe de tambour (1) en forme de cylindre creux, qui est montée à rotation des deux côtés et qui est entraînée soit par un côté soit par les deux côtés, sachant qu'un élément formant palier (11, 12) est boulonné sur un corps de tambour central (10) pourvu d'une bride (14, 15) de part et d'autre et est lui aussi pourvu d'une bride respective (16, 17), et que chacun des deux éléments formant paliers (11, 12) reçoit extérieurement un palier à roulement (18, 19) dont la bague intérieure est disposée coaxialement et solidairement en rotation sur la périphérie de l'élément formant palier (11, 12) et dont la bague extérieure est reçue par un flasque (3, 4), sachant qu'un des paliers est un palier fixe et que l'autre palier est un palier libre, et qu'un entraînement est raccordé à au moins un des deux éléments formant paliers (11, 12), sachant que l'entraînement ou les entraînements ainsi que les flasques (3, 4) sont fixés de manière amovible sur une base commune, **caractérisé en ce que** les deux éléments formant paliers (11, 12) et le corps de tambour (10) présentent le même diamètre extérieur.

2. Tambour d'entraînement pour un transporteur à courroie selon la revendication 1, **caractérisé en ce qu'**il est prévu comme entraînements soit des entraînements électromécaniques (5), soit des entraînements directs (2) sans transmission à vitesse lente.

3. Tambour d'entraînement pour un transporteur à courroie selon les revendications 1 et 2, **caractérisé en ce qu'**il est prévu comme entraînement des moteurs-couples, sachant que, respectivement, le stator (20, 21) du moteur électrique, situé à l'extérieur, est fixement relié au carter de moteur (24, 25) et que le rotor (22, 23) du moteur électrique, situé à l'intérieur, est relié en solidarité de rotation et de manière amovible à l'élément formant palier (11, 12) en forme de cylindre creux.

4. Tambour d'entraînement pour un transporteur à courroie selon les revendications 1 et 2, **caractérisé en ce qu'**il est prévu comme entraînements électromécaniques (5) des moteurs électriques (50) à vitesse rapide suivis d'une transmission (51), et la sortie de la transmission se trouve en liaison fonctionnelle avec l'élément formant palier (11, 12) par l'intermédiaire soit d'un élément de liaison (6, 7), soit d'une bride (52, 53) emmanchée sur la sortie de transmission, soit d'un embrayage.

5. Tambour d'entraînement pour des transporteurs à courroie selon les revendications 1 et 2, **caractérisé en ce que** l'enveloppe de tambour (1) est renforcée intérieurement par des tôles de cloisonnement et/ou des nervures soudées.

6. Tambour d'entraînement pour des transporteurs à courroie selon les revendications 1 et 2, **caractérisé en ce que** le corps de tambour central (10) est pourvu extérieurement d'une garniture de friction (13) sur la surface de portée de la courroie.

7. Tambour de renvoi et tambour tendeur pour des transporteurs à courroie, sachant qu'une enveloppe de tambour (1) est constituée d'un corps de tambour central (10) sur lequel un élément formant palier respectif (11, 12) est bridé de part et d'autre, et que chacun des deux éléments formant paliers reçoit un palier à roulement qui est respectivement porté extérieurement par un flasque (3, 4), **caractérisés en ce que** les deux éléments formant paliers (11, 12) et le corps de tambour (10) présentent le même diamètre extérieur.

8. Tambour tendeur selon la revendication 7, **caractérisé en ce que** les flasques (3, 4) sont disposés à translation dans la direction longitudinale de la courroie dans un dispositif tendeur de courroie.
